# EUROPÄISCHE PATENTSCHRIFT

(11) **EP 2 783 421 B1**
(45) Veröffentlichungstag und Bekanntmachung des Hinweises auf die Patenterteilung: **09.01.2019**
(21) Anmeldenummer: 12798156.1
(22) Anmeldetag: 23.11.2012
(51) Int. Cl.: H01R 4/62, H01R 4/70, H01R 11/28, H01R 13/03, H01R 13/405, H01R 43/24, H01M 2/20, H01M 2/30, H01M 2/32

(54) **STROMABGRIFFSELEMENT FÜR EIN ENERGIESPEICHERMODUL**
CURRENT TAP ELEMENT FOR AN ENERGY STORAGE MODULE
ÉLÉMENT DE PRÉLÈVEMENT DE COURANT POUR UN MODULE ACCUMULATEUR D'ÉNERGIE

(30) Priorität: 24.11.2011 DE 102011087038
(43) Veröffentlichungstag der Anmeldung: 01.10.2014
(73) Patentinhaber: Bayerische Motoren Werke Aktiengesellschaft, 80809 München (DE); Diehl Metal Applications GmbH, 14167 Berlin (DE)
(72) Erfinder: GOESMANN, Hubertus, 89564 Auernheim (DE); BORN, Christoph, 80935 München (DE); HECK, Harald, 90455 Nürnberg (DE); WARMUTH, Frank, 14469 Postsdam (DE)
(74) Vertreter: Hoefer & Partner Patentanwälte mbB
(86) Internationale Anmeldenummer: PCT/EP2012/004860
(87) Internationale Veröffentlichungsnummer: WO 2013/075842

(56) Entgegenhaltungen:
- EP-A1- 2 357 706
- DE-A1-102005 056 648
- DE-A1-102006 031 839
- JP-A- 2004 111 058

## Beschreibung

Die Erfindung betrifft ein Stromabgriffselement für ein Energiespeichermodul sowie einen Hochvoltspeicher mit dem Energiespeichermodul und dem Stromabgriffelement, insbesondere für ein Kraftfahrzeug.

In einem üblicherweise als Batterie bezeichneten Hochvoltspeicher zur Spannungsversorgung eines Kraftfahrzeugs kommen Energiespeichermodule zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten Speicherzellen. Die einzelnen Speicherzellen enthalten elektrochemische Zellen der Batterie. Der Stapel aus den einzelnen Speicherzellen wird zumeist verspannt. Die Verspannung dient neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Die mehreren Speicherzellen der Energiespeichermodule werden untereinander elektrisch verbunden. An den Polen des Energiespeichermoduls muss die Spannung abgegriffen werden.

DE102006031839A1 offenbart ein elektrisches Kontaktelement, bei dem ein Aluminium-Flachteil mit einem aus Übergangsmetall gebildeten Flachteil stoffschlüssig miteinander verbunden wird. Um eine Korrosion zwischen den Flachteilen zu verhindern, wird dabei eine Nahtstelle zwischen dem Aluminium und dem Übergangsmetall isoliert.

JP2004111058 offenbart einen Steckverbinder zum Verbinden eines Aluminiumkabels mit einem Stecker.

Es ist Aufgabe der vorliegenden Erfindung, ein Stromabgriffselement für ein Energiespeichermodul bereitzustellen, das bei kostengünstiger Herstellung und einfacher Montage ein sicheres Kontaktieren des Energiespeichermoduls ermöglicht.

Die Aufgabe wird gelöst durch die Merkmale des unabhängigen Anspruchs. Die abhängigen Ansprüche haben bevorzugte Weiterbildungen der Erfindung zum Gegenstand.

Somit wird die Aufgabe gelöst durch ein Stromabgriffselement für ein Energiespeichermodul umfassend ein Kontaktelement aus einem ersten Metall und ein Leitelement aus einem zum ersten Metall unterschiedlichen zweiten Metall. Das Kontaktelement ist zum direkten Verbinden mit einem Pol des Energiespeichermoduls ausgebildet. Das Leitelement ist direkt verbunden mit dem Kontaktelement. Unter dem Begriff "direkt verbunden" versteht sich im Rahmen der Anmeldung eine Verbindung ohne Zwischenelemente. Diese Verbindung ist elektrisch leitfähig. Allerdings kann sich ein zur Herstellung der Verbindung verwendetes Material zwischen den beiden direkt verbundenen Elementen befinden. Wird das Kontaktelement und das Leitelement beispielsweise verlötet, so kann sich Lötzinn zwischen den beiden Bauteilen befinden und es handelt sich trotzdem um eine direkte Verbindung. Der Pol des Energiespeichermoduls kann auf unterschiedliche Weise gebildet sein. So kann der Pol des Energiespeichermoduls direkt ein Anschlussterminal einer elektrochemischen Speicherzelle sein. Alternativ dazu ist es auch möglich, dass das Energiespeichermodul mehrere einzelne elektrochemische Speicherzellen umfasst. Die einzelnen Pole dieser Speicherzellen werden dann wiederum zusammengefasst zu Polen des Energiespeichermoduls. Darüber hinaus umfasst das erfindungsgemäße Stromabgriffselement eine umgespritzte Kunststoffhülle, die das Leitelement vollständig umhüllt. "Umgespritzt" bedeutet hier, dass die Kunststoffhülle mit einem Spritzgussverfahren direkt auf das Leitelement und teilweise auch auf das Kontaktelement aufgespritzt ist. Des Weiteren befindet sich in dieser Kunststoffhülle ein Anschluss zum Kontaktieren des Leitelementes. Das Leitelement ist bis an den Rand der Kunststoffhülle herangeführt, so dass es kontaktiert werden kann. Über diesen Anschluss wird die Spannung vom Leitelement abgegriffen.

Durch die erfindungsgemäße Ausgestaltung des Stromabgriffselements wird ein Schutz des Leitelementes vor Korrosion erreicht und darüber hinaus wird über die Kunststoffhülle auch der Berührschutz, beispielsweise während der Montage der Batterie oder während Wartungsarbeiten, realisiert. Die Herstellung des Stromabgriffselementes ist aufgrund der verwendeten Spritzgusstechnik sehr schnell und robust sowie automatisierbar.

Es ist vorgesehen, dass das erste Metall eine niedrigere Elektronegativität als das zweite Metall aufweist. Insbesondere ist vorgesehen, dass das erste Metall bessere Schweißeigenschaften als das zweite Metall aufweist. Dadurch kann das Kontaktelement direkt mit einem metallenen Element des Energiespeichermoduls verschweißt werden. Für das erste Metall wird vorwiegend Aluminium verwendet. Für das zweite Metall kommt vorwiegend Kupfer zum Einsatz. In erster Linie wird man hier keine reinen Bauteile aus Aluminium oder Kupfer verwenden sondern verschiedene Legierungen. Die Legierung des ersten Metalls besteht dann vorwiegend aus Aluminium, die Legierung des zweiten Metalls vorwiegend aus Kupfer.

Des Weiteren ist bevorzugt vorgesehen, dass das Kontaktelement und das Leitelement miteinander verschweißt oder verlötet sind. Dadurch ist der Kontakt zwischen den beiden Elementen innerhalb der Kunststoffhülle sichergestellt.

Darüber hinaus hüllt bevorzugt die Kunststoffhülle das Leitelement zum Korrosionsschutz dicht ein. Aus der Kunststoffhülle ragt lediglich das Kontaktelement heraus. Die Kunststoffhülle schließt bevorzugt um das Kontaktelement herum vollumfänglich dicht ab. Das heißt, dass die Kunststoffhülle auf dem Kontaktelement direkt aufliegt. Dadurch ist keine zusätzliche Dichtung oder kein zusätzliches Dichtmaterial zwischen Kontaktelement und Kunststoffhülle vonnöten und es wird vermieden, dass Flüssigkeit entlang des Kontaktelementes zum Leitelement vordringt. Ebenso schließt die Kunststoffhülle im Bereich des Anschlusses dicht mit dem Leitelement ab, so dass auch hier keine zusätzlichen Dichtstoffe eingesetzt werden müssen. Durch diese Abdichtung mit der Kunststoffhülle wird gleichzeitig eine zusätzliche Oberflächenveredelung insbesondere des Leitelementes vermieden. Dadurch sinken die Fertigungskosten. Die bisher bekannte Problematik mit der Alterung von Dichtstoffen ist hier nicht mehr relevant.

In einer weiteren vorteilhaften Ausgestaltung ist vorgesehen, dass das Kontaktelement und das Leitelement plattenförmig ausgebildet sind. Insbesondere werden die beiden Elemente als Stanzbiegeteile gefertigt. Das Kontaktelement und das Leitelement liegen innerhalb der Kunststofffläche flächig aufeinander. Dadurch entsteht ein Überlappungs- bzw. Überschneidungsbereich. In diesem Bereich können die beiden Elemente gut miteinander verbunden werden und die Leitfähigkeit zwischen Kontaktelement und Leitelement ist sichergestellt.

Die Erfindung umfasst des Weiteren einen Hochvoltspeicher zur Spannungsversorgung, insbesondere eines Kraftfahrzeugs. Dieser Hochvoltspeicher umfasst zumindest ein Energiespeichermodul mit mehreren elektrochemischen Speicherzellen und zumindest ein soeben beschriebenes Stromabgriffselement. Das Kontaktelement des Stromabgriffselementes ist mit einem Pol entweder verschweißt oder verlötet. Über ein Kabel des Hochvoltspeichers wird das Leitelement am Anschluss kontaktiert. Die im Rahmen des erfindungsgemäßen Stromabgriffselements beschriebenen vorteilhaften Ausgestaltungen finden entsprechend vorteilhafte Anwendung auf den erfindungsgemäßen Hochvoltspeicher.

Insbesondere ist vorgesehen, dass mehrere Anschlussterminals unterschiedlicher Speicherzellen mittels sogenannter Zellverbinder untereinander verbunden sind. Das Kontaktelement wird dann mit einem der Zellverbinder verbunden, insbesondere verschweißt oder verlötet.

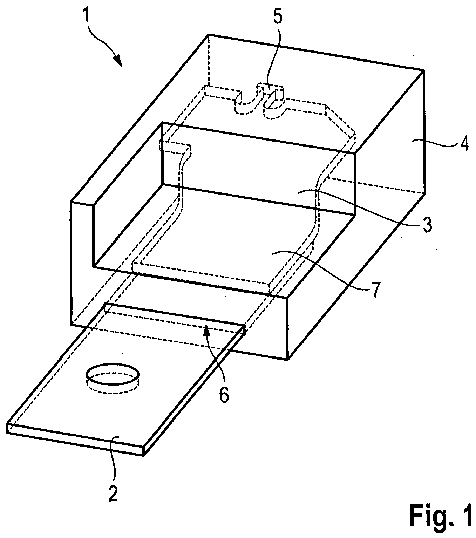

Im Folgenden wird die Erfindung anhand der begleitenden Zeichnung genauer erläutert. Dabei zeigt Figur 1 ein erfindungsgemäßes Stromabgriffselement gemäß einem Ausführungsbeispiel.

Figur 1 zeigt ein Stromabgriffselement 1 umfassend ein Kontaktelement 2, ein Leitelement 3 und eine umgespritzte Kunststoffhülle 4. Das Kontaktelement 2 und das Leitelement 3 sind beide plattenförmig ausgebildet. Das Kontaktelement 2 und das Leitelement 3 überlagern sich in einem dargestellten Überschneidüngsbereich 7. In diesem Überschneidungsbereich 7 liegt das Leitelement 3 flächig auf dem Kontaktelement 2. Des Weiteren sind die beiden Elemente 2, 3 im Überschneidungsbereich 7 miteinander verschweißt.

Das Leitelement 3 ist vollständig von der Kunststoffhülle 4 umhüllt. Dabei liegt der Überschneidungsbereich 7 vollständig innerhalb der Kunststoffhülle 4, so dass an einer Austrittsstelle 6 das Kontaktelement 2 und nicht das Leitelement 3 aus der Kunststoffhülle 4 herausragt. An dieser Austrittsstelle 6 schließt die Kunststoffhülle 4 vollumfänglich dicht an dem Kontaktelement 2 ab. Dadurch wird vermieden, dass Flüssigkeit über das Kontaktelement 2 nach Innen zum Leitelement 3 gelangen kann.

An der Rückseite des Stromabgriffselements 1 befindet sich ein Anschluss 5. Auch an dieser Stelle des Anschlusses 5 schließt die Kunststoffhülle 4 dicht mit dem Leitelement 3 ab. Über den Anschluss 5 kann das Leitelement 3 kontaktiert werden.

Der nicht von der Kunststoffhülle 4 umhüllte Bereich des Kontaktelementes 2 dient zum Verbinden mit einem Pol eines Energiespeichermoduls.

Das Kontaktelement 2 besteht vorwiegend aus Aluminium. Das Leitelement 3 besteht vorwiegend aus Kupfer. Für das Leitelement 3 wird Kupfer verwendet, da es eine sehr gute Leitfähigkeit hat. Das Aluminium des Kontaktelementes 2 eignet sich besonders gut für Schweißverbindungen.

### Bezugszeichenliste

- 1: Stromabgriffselement
- 2: Kontaktelement
- 3: Leitelement
- 4: Kunststoffhülle
- 5: Anschluss
- 6: Austrittsstelle
- 7: Überschneidungsbereich

## Patentansprüche

1. Stromabgriffselement (1) für ein Energiespeichermodul, umfassend:
- ein Kontaktelement (2) aus einem ersten Metall zum direkten Verbinden mit einem Pol des Energiespeichermoduls,
- ein direkt mit dem Kontaktelement (2) verbundenes Leitelement (3) aus einem zum ersten Metall unterschiedlichen zweiten Metall,
**dadurch gekennzeichnet dass**
- das Kontaktelement (2) und das Leitelement (3) sich in einem Überschneidungsbereich (7) überlagern,
- eine umgespritzte Kunststoffhülle (4) das Leitelement (3) umhüllt, wobei der Überschneidungsbereich (7) vollständig innerhalb der Kunststoffhülle (4) liegt und dass
- das Leitelement (3) bis an den Rand der Kunststoffhülle (4) herangeführt ist, so dass es kontaktiert werden kann, und sich ein Anschluss (5) in der Kunststoffhülle (4) zum Kontaktieren des Leitelements (3) befindet,
- wobei das erste Metall vorwiegend aus Aluminium besteht und das zweite Metall vorwiegend aus Kupfer besteht.

2. Stromabgriffselement nach Anspruch 1, **dadurch gekennzeichnet, dass** das erste Metall eine niedrigere Elektronegativität als das zweite Metall aufweist.

3. Stromabgriffselement nach einem der vorhergehenden Ansprüche, **dadurch gekennzeichnet, dass** das Kontaktelement (2) und das Leitelement (3) miteinander verschweißt oder verlötet sind.

4. Stromabgriffselement nach einem der vorhergehenden Ansprüche, **dadurch gekennzeichnet, dass** die Kunststoffhülle (4) das Leitelement (3) zum Korrosionsschutz dicht einhüllt.

5. Stromabgriffselement nach einem der vorhergehenden Ansprüche, **dadurch gekennzeichnet, dass** das Kontaktelement (2) aus der Kunststoffhülle (4) herausragt und die Kunststoffhülle (4) an dem Kontaktelement (2) vollumfänglich dicht, ohne zusätzliche Dichtungen, abschließt.

6. Stromabgriffselement nach einem der vorhergehenden Ansprüche, **dadurch gekennzeichnet, dass** das das Kontaktelement (2) und das Leitelement (3) plattenförmig, insbesondere als Stanzbiegeteile, ausgebildet sind, wobei das Kontaktelement (2) und das Leitelement (3) in der Kunststoffhülle (4) flächig aufeinander liegen.

7. Hochvoltspeicher zur Spannungsversorgung, insbesondere eines Kraftfahrzeugs, umfassend:
- ein Energiespeichermodul mit mehreren elektrochemischen Speicherzellen, und
- zumindest ein Stromabgriffselement (1) nach einem der vorhergehenden Ansprüche, wobei das Kontaktelement (2) mit zumindest einem Pol des Energiespeichermoduls verbunden, insbesondere verschweißt oder verlötet, ist, und
- zumindest ein Kabel das mit dem Anschluss (5) am Leitelement (3) verbunden ist.

8. Hochvoltspeicher nach Anspruch 7, **dadurch gekennzeichnet, dass** mehrere Anschlussterminals unterschiedlicher Speicherzellen mittels Zellverbindern untereinander verbunden sind und das Kontaktelement (2) direkt mit einem der Zellverbinder verbunden ist.

## Claims

1. Current tap element (1) for an energy storage module, comprising:
- a contact element (2) made of a first metal for being directly connected to a pole of the energy storage module,
- a conducting element (3) that is directly connected to the contact element (2) and made of a second metal that differs from the first metal,
**characterized in that**
- the contact element (2) and the conducting element (3) overlap in an overlapping area (7),
- an injection-molded plastic sleeve (4) encases the conducting element (3), wherein the overlapping area (7) is located completely inside the plastic sleeve (4),
and **in that**
- the conducting element (3) is guided up to the edge of the plastic sleeve (4), so that it can be contacted, and a connector (5) is positioned in the plastic sleeve (4) for contacting the conducting element (3),
- wherein the first metal consists mostly of aluminum and the second metal consist mostly of copper.

2. Current tap element according to claim 1, **characterized in that** the first metal has a lower electronegativity than the second metal.

3. Current tap element according to any of the preceding claims, **characterized in that** the contact element (2) and the conducting element (3) are welded or soldered together.

4. Current tap element according to any of the preceding claims, **characterized in that** the plastic sleeve (4) encases the conducting element (3) in a sealing manner to provide corrosion protection.

5. Current tap element according to any of the preceding claims, **characterized in that** the contact element (2) projects from the plastic sleeve (4), and the plastic sleeve (4) terminates at the contact element (2) in a fully sealing manner without additional seals.

6. Current tap element according to any of the preceding claims, **characterized in that** the contact element (2) and the conducting element (3) are embodied in a plate-shaped manner, in particular as punched/bent parts, wherein the contact element (2) and the conducting element (3) rest on top of each other in a planar manner inside the plastic sleeve (4).

7. High-voltage accumulator for voltage supply, in particular to a motor vehicle, comprising:
- an energy storage module with multiple electrochemical storage cells, and
- at least one current tap element (1) according to any of the preceding claims, wherein the contact element (2) is connected - in particular welded or soldered - to at least one pole of the energy storage module, and
- at least one cable that is connected to the connector (5) at the conducting element (3).

8. High-voltage accumulator according to claim 7, **characterized in that** multiple connector terminals of different storage cells are connected amongst each other by means of cell connectors, and the contact element (2) is directly connected to one of the cell connectors.

## Revendications

1. Elément de prélèvement de courant (1) pour un module accumulateur d'énergie, comprenant :
- un élément de contact (2) constitué d'un premier métal à relier directement à un pôle du module accumulateur d'énergie,
- un élément conducteur (3) constitué d'un deuxième métal différent du premier métal, relié directement à l'élément de contact (2),
**caractérisé en ce que**
- l'élément de contact (2) et l'élément conducteur (3) se superposent dans une zone de recoupement (7),
- une enveloppe plastique extrudée (4) qui enrobe l'élément conducteur (3), dans lequel la zone de recoupement (7) se situe complètement à l'intérieur de l'enveloppe plastique (4) et que
- l'élément conducteur (3) est amené jusqu'au bord de l'enveloppe plastique (4) de sorte qu'il peut être mis en contact, et qu'un raccordement (5) se trouve dans l'enveloppe plastique (4) pour la mise en contact de l'élément conducteur (3),
- dans lequel le premier métal consiste principalement en aluminium et le deuxième métal consiste principalement en cuivre.

2. Elément de prélèvement de courant selon la revendication 1, **caractérisé en ce que** le premier métal présente une électronégativité plus faible que le deuxième métal.

3. Elément de prélèvement de courant selon l'une des revendications précédentes, **caractérisé en ce que** l'élément de contact (2) et l'élément conducteur (3) sont soudés ou brasés l'un avec l'autre.

4. Elément de prélèvement de courant selon l'une quelconque des revendications précédentes, **caractérisé en ce que** l'enveloppe plastique (4) enveloppe de façon étanche l'élément conducteur (3) pour assurer la protection contre la corrosion.

5. Elément de prélèvement de courant selon l'une quelconque des revendications précédentes, **caractérisé en ce que** l'élément de contact (2) dépasse de l'enveloppe plastique (4) et l'enveloppe plastique (4) au niveau de l'élément de contact (2) est complètement étanche sans joints supplémentaires.

6. Elément de prélèvement de courant selon l'une quelconque des revendications précédentes, **caractérisé en ce que** l'élément de contact (2) et l'élément conducteur (3) sont conçus en forme de plaque, en particulier comme des pièces pliées estampées, dans lequel l'élément de contact (2) et l'élément conducteur (3) sont placés à plat l'un sur l'autre dans l'enveloppe plastique (4).

7. Batterie haute tension pour l'alimentation électrique, en particulier d'un véhicule automobile, comprenant :
- un module accumulateur d'énergie doté de cellules de stockage électrochimiques, et
- au moins un élément de prélèvement de courant (1) selon l'une quelconque des revendications précédentes, dans laquelle l'élément de contact (2) est relié à au moins un pôle du module accumulateur d'énergie, en particulier est soudé ou brasé, et
- au moins un câble qui est relié avec le raccordement (5) à l'élément conducteur (3).

8. Batterie haute tension selon la revendication 7, **caractérisée en ce que** plusieurs terminaux de raccordement de différentes cellules de stockage sont reliés les uns aux autres au moyen de raccords de cellule et **en ce que** l'élément de contact (2) est relié directement à un raccord de cellule.
